# EUROPÄISCHE PATENTSCHRIFT

(11) **EP 0 529 323 B1**
(45) Veröffentlichungstag und Bekanntmachung des Hinweises auf die Patenterteilung: **15.11.1995**
(21) Anmeldenummer: 92112778.3
(22) Anmeldetag: 27.07.1992
(51) Int. Cl.: B66B 5/04, B66D 5/04, B66D 5/12, F16D 59/00

(54) **Notbremseinrichtung für einen Aufzug**
Emergency brake for a lift
Dispositif de freinage d'urgence d'ascenseur

(30) Priorität: 28.08.1991 US 751089
(43) Veröffentlichungstag der Anmeldung: 03.03.1993
(73) Patentinhaber: INVENTIO AG, CH-6052 Hergiswil NW (CH)
(72) Erfinder: Lamb, Miles P., Bedminster, New Jersey (US)

(56) Entgegenhaltungen:
- EP-A- 0 385 180
- DE-C- 2 857 376
- GB-A- 1 118 399
- US-A- 3 966 027
- US-A- 4 923 055
- US-A- 5 007 505

## Beschreibung

Die vorliegende Erfindung betrifft eine Notbremseinrichtung für einen Aufzug mit Kabine, Gegengewicht, Tragseilen, Treibscheibe, Bremse, Motor, Fangvorrichtung an der Kabine, und dieser zusätzlichen Einrichtung, welche direkt auf die Treibscheibe wirkt.
Eine Aufzugsanlage der genannten Art besitzt die erwähnte Fangvorrichtung an der Kabine inform einer Schienenfangvorrichtung, welche bei Uebergeschwindigkeit in Ab-Richtung von einem mechanischen Geschwindigkeitsbegrenzer ausgelöst wird. Die normale Betriebsbremse dient im Fahrbetrieb als Haltebremse und kann beim Ansprechen eines Kontaktes im Sicherheitskreis einen Notstop in beiden Fahrrichtungen erzeugen.
Es besteht nun aufgrund von grösserem Sicherheitsdenken und allenfalls kommenden Vorschriften der Bedarf für eine weitere Bremseinrichtung, welche unabhängig von den bestehenden Bremseinrichtungen arbeitet, vor der Schienenfangvorrichtung aktiv wird und welche speziell eine kontrollierte und reproduzierbare Notbremsung in Auf-Richtung bewirken kann. Eine Bremsung des aufwärtsfahrenden Aufzuges darf einerseits eine Verzögerung von 1 g nicht überschreiten, soll aber anderseits eine Verzögerung von beispielsweise 5 bis 7 m/sec2 ermöglichen.
Hierzu ist die Betriebsbremse nicht geeignet, weil mit dieser bei treibender Last (Kabine voll ab, Kabine leer auf) nur noch eine Verzögerung von etwas über 1 m/sec2 möglich ist. Mit der Schienenfangvorrichtung werden hingegen Verzögerungen von >1 g erreicht, weshalb diese in Auf-Richtung wegen Seilschlaffung mit und weiteren Effekten entsprechenden Folgen nicht verwendet wird. Zudem ist das Lösen einer betätigten Schienenfangvorrichtung mit einigem Aufwand, wie etwa Schienen an der Fangstelle überarbeiten, verbunden.
Es ist mit der US-Patentschrift Nr. 4,923,055, die die Merkmale des Oberbegriffs des Anspruchs 1 zeigt, eine Lösung dargestellt, nach welcher mit einer Feder vorgespannte Bremshebel mit Bremsbacken beidseits des Treibscheibenrandes angeordnet sind und durch einen Auslösemechanismus seitlich an den Treibscheibenrand gedrückt werden, wodurch eine entsprechende Bremswirkung erzielt wird. Die Auslösung erfolgt indirekt, indem via ein Elektromagnet ein Mitnehmerhebel freigegeben wird, welcher dann von einer radialen Rippe in der Treibscheibe erfasst und betätigt wird, worauf die mechanische Verklinkung der noch offenen Notbremse aufgehoben wird und die Bremshebel mit der Kraft der vorgespannten Feder einfallen und bremsen. Die Einrichtung ist als Anbauversion ausgeführt mit entsprechend vielen Teilen und muss, nach erfolgter Auslösung von Hand wieder in die gereitschaftsstellung gebracht werden. Die US-patentschrift Nr. 4,977,982 und die US-Patentschrift Nr. 5,007,505 beschreiben je eine Notbremseinrichtung bei welcher Bremselemente tangential an die Treibscheibe hin geführt werden, wobei nebst einer Federvorspannung eine mechanische Servowirkung durch den Mitnehmereffekt zur Wirkung kommen. Die Reproduzierbarkeit eines definierten Bremsmomentes kann sehr schwierig sein. Ferner sind beide Versionen als nachträglich ausgeführte Anbaukonstruktionen ausgeführt.

Der vorliegenden Erfindung liegt die Aufgabe zugrunde, eine Notbremseinrichtung zu schaffen, welche im Antriebssystem konstruktiv voll integriert ist, ein definiertes Bremsmoment reproduziert, wenig Teile aufweist und welche mit Steuerungsmittel wieder in die Bereitschaftsstellung gebracht werden kann.

Diese Aufgabe wird durch die in den Ansprüchen gekennzeichnete Erfindung gelöst.

Die durch die Erfindung erreichten Vorteile sind im wesentlichen darin Zu sehen, dass das bremsaktive Teil Bestandteil der Treibscheibe ist und schon vor der Aktivierung einer Notbremsung mit dem gewünschten Bremsdruck auf einer Bremsfläche aufliegt.

In den Zeichnungen ist ein Ausführungsbeispiel des Erfindungsgegenstandes dargestellt und es zeigen
- Fig. 1: einen Querschnitt durch die Notbremseinrichtung,
- Fig. 2: eine Draufsicht auf das Bremsteil,
- Fig. 3: Einzelheiten des Auslöseapparates,
- Fig. 4: Eingriffsituation des Arretierbolzens,
- Fig. 5: Ansteuerung der Magnetspule durch Begrenzerkontakt,
- Fig. 6: Ansteuerung der Magnetspule durch Unterbruch im Sicherheitskreis und
- Fig. 7: Auslöseapparat für Ruhestromauslösung.

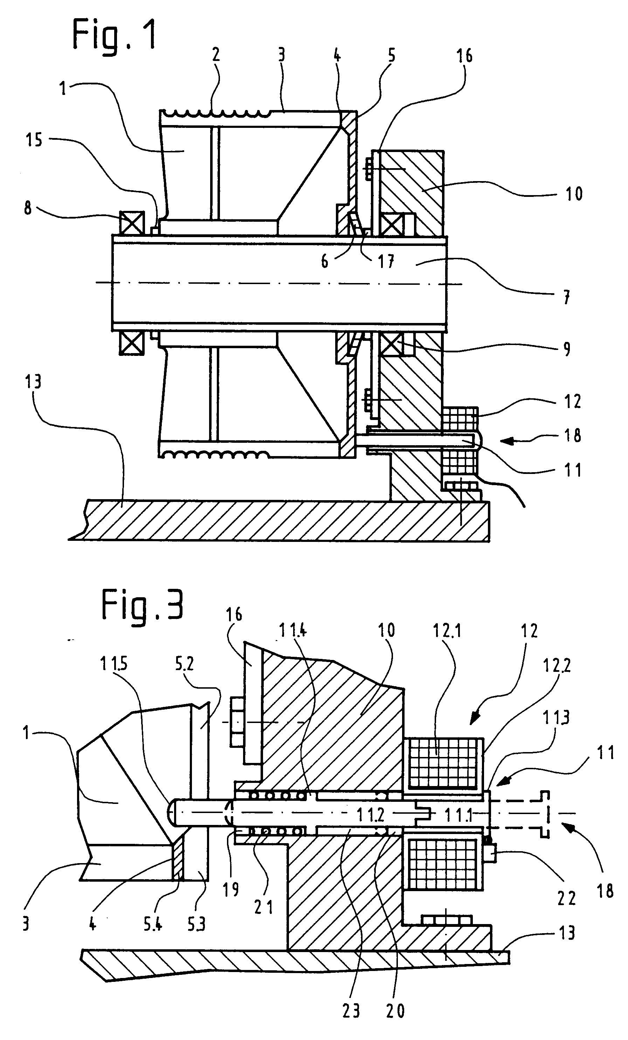

In der Fig. 1 ist 7 eine Treibscheibenwelle, welche links mit einem Wälzlager 8 und rechts mit einem Wälzlager 9 gelagert ist. Eine Treibscheibe 1 mit Seilrillen 2 und einer Backenbremsfläche 3 ist auf die Treibscheibenwelle 7 aufgepresst und gegen Verschieben nach links mit einem Anschlagring 15 gesichert. Das Wälzlager 9 befindet sich in einem Lagerbock 10 und ist mit einem Lagerdeckel 16 abgedeckt. Der Lagerbock 10 ist auf einer Grundplatte 13 befestigt. Zwischen dem Lagerdeckel 16 und der Treibscheibe 1 ist konzentrisch auf der Treibscheibenwelle 7 ein Distanzring 17, eine vorgespannte Tel lerfeder 6 und ein Bremsstern 5 vorhanden. Die vorgespannte Tellerfeder 6 presst den Bremsstern 5 gegen eine Kreisringstirnfläche 4. Ein Auslöseapparat 18 besitzt einen Arretierbolzen 11 und eine Magnetspule 12.

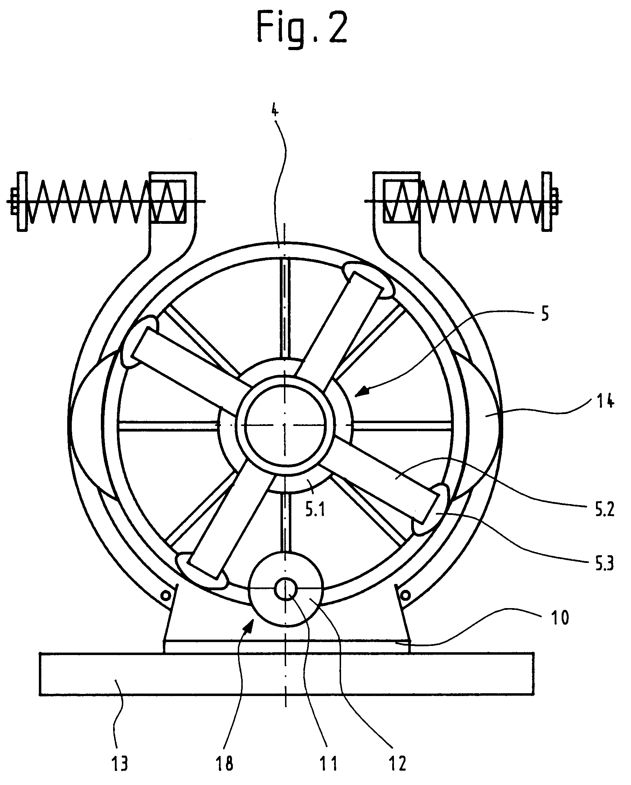

In der Fig. 2 ist eine Backenbremse mit 14 bezeichnet. Der Bremsstern 5 hat eine habe 5.1, Speichen 5.2 und Bremsplatten 5.3, letztere aufliegend auf einer Kreisringstirnfläche 4.

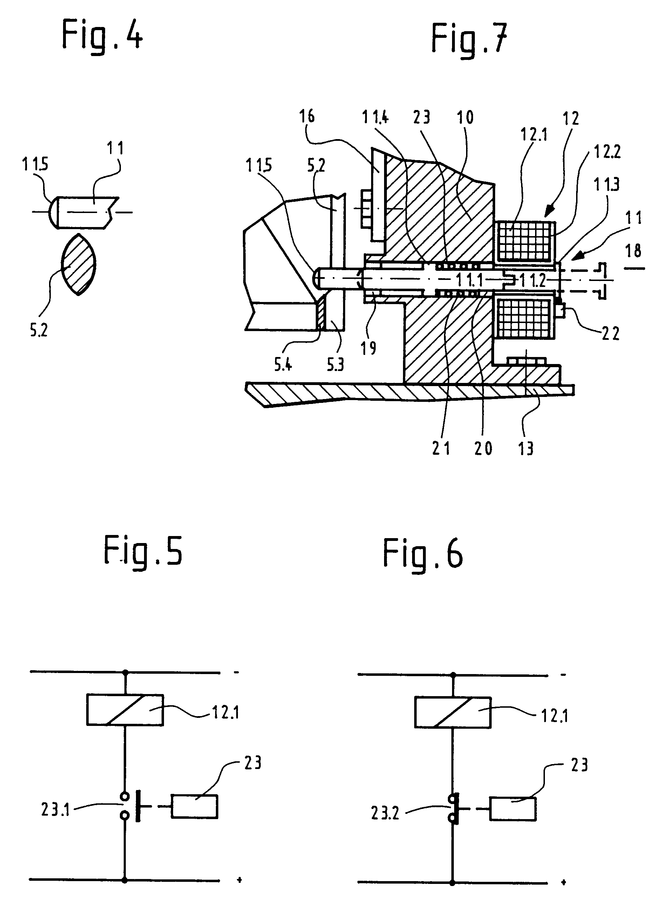

In der Fig. 3 sind die Einzelheiten des Auslöseapparates 18 dargestellt. In einer Bohrung 23 des Lagerbockes 10 mit einem darin befestigten linken Gleitlagerring 19 und einem darin befestigten rechten Gleitlagerring 20 ist der Arretierbolzen 11 achsial leicht verschiebbar gelagert. Der Arretierbolzen 11 besteht aus einem rechten magnetischen Teil 11.1 und einem linken nicht magnetischen Teil 11.2. Der nicht magnetische Teil 11.2 weist links eine sphärisch bombierte stirnfläche 11.5 und etwa in der Mitte des Arretierbolzens 11 einen Anschlagring 11.4 auf mit beidseitigen Anschlagschultern und mit einem Aussendurchmesser, der grösser ist als der Innendurchmesser der beiden Gleitlagerringe 19 und 20, so dass diese zusammen mit dem Anschlagring 11.4 entweder einen Endanschlag für die Horizontalbewegung des Arretierbolzens 11 oder als Abstützung einer dazwischen sich befindlichen Druckfeder 21 dienen. Der Arretierbolzen 11 ist momentan im Eingriff mit einer Speiche 5.2 des Bremssternes 5. Eine Wicklung 12.1 in einem Spulenkörper 12.2 ist deshalb als erregt anzunehmen, weshalb der magnetische Teil 11.1 des Arretierbolzens 11 hineingezogen wurde bis zu einem am rechten Ende des Arretierbolzens 11 befindlichen Endanschlagbund 11.3. Im hineingezogenen Zustand des Arretierbolzens 11 betätigt dessen Endanschlagbund 11.3 einen Schalter 22 für eine Zustandsmeldung an eine nicht dargestellte Aufzugssteuerung. Zwischen dem linken Gleitlagerring 19 und dem Anschlagring 11.4 des Arretierbolzens 11 ist die Druckfeder 21 so angeordnet, dass der Arretierbolzen 11 bei ausgeschalteter Spule nach rechts in die Bereitschaftslage geschoben wird. Die gestrichelt gezeichneten Konturen des Arretierbolzens 11 zeigen diesen zurückgezogen, also in der Bereitschaftslage. Mit 5.4 ist ein auf der Bremsplatte 5.3 befestigter Bremsbelag bezeichnet, welcher an die Kreisringstirnfläche 4 der Treibscheibe 1 gepresst wird.

In der Fig. 4 ist die Querschnittsform einer Speiche 5.2 des Bremssternes 5 dargestellt. Die dargestellte Querschnittsform ermöglicht ein problemloses Abgleiten und Eintauchen in den nächstes Speichenzwischenraum des betätigten Arretierbolzens, wenn dieser zufällig auf eine Speiche aufschlägt.

Die vorstehend in den Figuren beschriebene Einrichtung arbeitet wie folgt:
Wenn sich beim Aufwärtsfahren des Aufzuges eine Notsituation ereignet, beispielsweise eine Geschwindigkeitsüberschreitung durch Regelfehler oder ähnlichem, dann bewirkt der bei jedem Aufzug vorhandene mechanische Geschwindigkeitsbegrenzer kein Auslösen der Schienenfangvorrichtung an der Kabine, jedoch der bei einer definierten Ueberdrehzahl durch von Fliehelementen betätigte Kontakt wird in beiden Drehrichtungen betätigt und kann als Alarmsignalgeber benützt werden, wobei dann dessen Kontaktausgang direkt oder indirekt als Steuersignal für die Erregung der Magnetspule 12 dient.
Der Arretierbolzen 11 besteht gemäss Figurenbeschreibung aus einem nicht magnetischen linken Teil 11.2 und einem magnetischen rechten Teil 11.1. Der magnetische rechte Teil 11.1 weist ein magnetisch leitendes Material auf. Das Material der linken nicht magnetischen Teiles 11.2 des Arretierbolzens besteht aus einer magnetisch nicht leitenden Legierung hoher Festigkeit und muss der statischen und dynamischen Beanspruchung bei einer Notbremsauslösung standhalten. Bei einer solchen Notbremsfunktion wird der Arretierbolzen 11 zwischen die Speichen 5.2 geschoben und blockiert den Bremsstern 5, der nun mit seinem Bremsbelag 5.4 an der Kreisringstirnfläche 4 reibt und ein durch die Vorspannkraft der Tellerfeder 6 bestimmtes Bremsmoment erzeugt. Das Hereinziehen des Arretierbolzens 11 geschieht elektromagnetisch durch Erregung der Magnetspule 12. Die Wicklung 12.1 und die Abmessungen der Magnetspule 12 sind so ausgelegt, dass eine sehr kleine Erregerleistung benötigt wird, so dass relativ leistungsschwache Steuersignale genügen. Das Schaltungsprinzip dieser Ansteuerung ist in der Fig. 5 dargestellt, wo ein Geschwindigkeitsbegrenzer mit 23, und ein von ihm betätigter, normal offener Kontakt mit 23.1 bezeichnet ist.
Die Ansteuerung der Wicklung 12.1 kann auch nach dem Ruhestromprinzip erfolgen. Dabei wird gemäss Fig. 6 die Wicklung 12.1 via einen normal geschlossenen Begrenzerkontakt 23.2 dauernd erregt und hält den Arretierbolzen 11 herausgezogen in Bereitschaftsstellung (gestrichelte Kontur).
Um dies zu ermöglichen, muss die Druckfeder 21 rechts vom Anschlagring 11.4 angeordnet werden, und muss der linke Teil des Arretierbolzens 11 aus magnetischem Material 11.1 und der rechte Teil aus nicht magnetischem Material 11.2 bestehen, wie in Fig. 7 dargestellt. In dieser Darstellung befindet sich der Arretierbolzen 11 ebenfalls wie in der Fig. 3 in der den Bremsstern 5 blockierenden Stellung. Die Ansteuerung der Wicklung 12.1 kann zusätzlich noch durch andere Signale erfolgen. So ist es beispielsweise erwünscht ein Wegdriften der Kabine bei offenen Türen mit einer
Notbremsung zu stoppen, falls die Betriebsbremse aus irgend einem Grunde den Aufzug nicht stillhalten kann. Eine entsprechende Ansteuerlogik für die Wicklung 12.1 lässt sich aus einer Kombination von Sicherheits- und Kabinenpositionssignalen zusammenstellen.
Das Lösen der Notbremseinrichtung durch Zurückziehen des Arretierbolzens 11 in die Ausgangslage nach erfolgtem Einsatz wird durch Rückstellung des oder der Ansteuerkontakte in die Normallage und mechanischer Entlastung des Arretierbolzens 11 durch Einschalten der den Arretierbolzen entlastenden Fahrrichtung bewerkstelligt. Der an der Magnetspule 12 angebaute Kontakt 22 signalisiert der Aufzugssteuerung die Bereitschaftlage des Arretierbolzens 11. Die Notbremseinrichtung ist so sofort wieder einsatzbereit, wobei nach jedem Einsatz aus verschiedenen Gründen der Ursache einer Auslösung nachgegangen wird. Das in der vorliegenden Erfindung dargestellte Prinzip lässt sich nicht nur für Direkttaktionsanlagen sondern auch bei Windentraktion anwenden.

## Patentansprüche

1. Notbremseinrichtung für einen Aufzug mit Kabine, Gegengewicht, Tragseilen, Treibscheibe, Bremse, Motor, Fangvorrichtung an der Kabine und dieser Einrichtung als zusätzliche Bremse, welche direkt auf die Treibscheibe wirkt,
dadurch gekennzeichnet,
dass ein fortwährend mit Federkraft an eine Seitenfläche einer Treibscheibe 1 pressbares und normal mit dieser rotierbares Bremselement in Form eines Bremssternes 5 und ein achsial verschiebbarer, durch Eingreifen in den Bremsstern diesen blockierenden und dadurch ein Bremsmoment erzeugender Arretierbolzen 11 vorhanden ist.

2. Notbremseinrichtung nach Anspruch 1
dadurch gekennzeichnet,
dass das als Bremsstern 5 ausgebildete Bremselement eine auf einer Treibscheibenwelle 7 achsial verschiebbare Nabe 5.1, radial angeordnete Speichen 5.2 und auf einer Kreisringstirnfläche 4 der Treibscheibe 1 aufliegende Bremsplatten 5.3 aufweist.

3. Notbremseinrichtung nach Anspruch 1
dadurch gekennzeichnet,
dass ein den Arretierbolzen 11 achsial bewegender, an einem Lagerbock 10 befestigter Auslöseapparat 18 mit einer Magnetspule 12, einer Druckfeder 21 und Gleitringlagern 19,20 vorhanden ist.

4. Notbremseinrichtung nach Anspruch 1
dadurch gekennzeichnet,
dass eine, zwischen der Nabe 5.1 und einem Distanzring 17 auf der Treibscheibenwelle 7 angeordnete, das statische Anpressen des Bremssternes 5 an die Kreisringstirnfläche 4 der Treibscheibe 1 ermöglichende Tellerfeder 6 vorhanden ist.

5. Notbremseinrichtung nach Anspruch 1
dadurch gekennzeichnet,
dass der Arretierbolzen 11 einen magnetisch leitenden Teil 11.2 und einen magnetisch nicht leitenden Teil 11.1 aufweist.

6. Notbremseinrichtung nach Ansprüchen 1 und 5
dadurch gekennzeichnent,
dass der Arretierbolzen 11 eine sphärisch bombierte Stirnfläche 11.5 einen Anschlagring 11.4 und einen, einen Schalter 22 betätigenden Endanschlagbund 11.3 aufweist.

7. Notbremseinrichtung nach Ansprüchen 1 und 3
dadurch gekennzeichnet,
dass ein, eine Wicklung 12.1 der Magnetspule 12 einschaltender Arbeitskontakt 23.1 eines mechanischen Geschwindigkeitsbegrenzers 23 vorhanden ist.

8. Notbremseinrichtung nach Ansprüchen 1 und 3
dadurch gekennzeichnet,
dass ein, die Wicklung 12.1 der Magnetspule 12 ausschaltender Ruhekontakt 23.2 des mechanischen Geschwindigkeitsbegrenzers 23 vorhanden ist.

## Claims

1. Emergency brake equipment for a lift with a cage, a counterweight, suspension cables, a drive pulley, a brake, a motor, a catching device at the cage and a brake which is additional to this equipment and acts directly on the drive pulley, characterised thereby, that a brake element, which is constantly urgeable by spring force against a lateral surface of a drive pulley 1 and normally rotatable therewith, is present in the shape of a brake star 5 and an axially displaceable arresting pin 11, which by engagement into the brake star blocks this and thereby produces a braking torque.

2. Emergency brake equipment according to claim 1, characterised thereby, that the brake element constructed as brake star 5 displays a hub 5.1, which is axially displaceable on a drive pulley shaft 7, radially arranged spokes 5.2 and brake plates 5.3, which rest on a circularly annular end face 4 of the drive pulley 1.

3. Emergency brake equipment according to claim 1, characterised thereby, that a triggering device 18, which is fastened at a bearing block 10 and moves the arresting pin 11 axially, with a magnet coil 12, a compression spring 21 and slide ring bearings 19 and 20 is present.

4. Emergency brake equipment according to claim 1, characterised thereby, that a plate spring 6 is present, which is arranged between the hub 5.1 and a spacer ring 17 on the drive pulley shaft 7 and enables the static urging of the brake star 5 against the circularly annular end face 4 of the drive pulley 1.

5. Emergency brake equipment according to claim 1, characterised thereby, that the arresting pin 11 displays a magnetically conductive part 11.2 and a magnetically non-conductive part 11.1.

6. Emergency brake equipment according to the claims 1 and 5, characterised thereby, that the arresting pin 11 displays a spherically rounded end face 11.5, an abutment ring 11.4 and an end abutment collar 11.3 actuating a switch 22.

7. Emergency brake equipment according to the claims 1 and 3, characterised thereby, that an operating contact 23.1, which switches on a winding 12.1 of the magnet coil 12, of a mechanical speed limiter 23 is present.

8. Emergency brake equipment according to the claims 1 and 3, characterised thereby, that a rest contact 23.1, which switches off the winding 12.1 of the magnet coil 12, of the mechanical speed limiter 23 is present.

## Revendications

1. Dispositif de freinage d'urgence pour un ascenseur comprenant une cabine, un contre-poids, des câbles porteurs, une poulie motrice, un frein, un moteur, un dispositif d'arrêt prévu au niveau de la cabine et ce dispositif comme frein supplémentaire, qui agit directement sur la poulie motrice,
caractérisé en ce qu'il est prévu un élément de freinage qui est apte à être pressé en permanence avec une force de ressort contre une surface latérale d'une poulie motrice 1, qui est apte à tourner normalement avec celle-ci, et qui a la forme d'un frein en étoile 5, et un boulon d'arrêt 11 qui est mobile axialement, qui bloque le frein en étoile en venant en prise dans celui-ci, et qui produit ainsi un moment de freinage.

2. Dispositif de freinage d'urgence selon la revendication 1, caractérisé en ce que l'élément de freinage conçu comme un frein en étoile 5 comporte un moyeu 5.1 mobile axialement sur un arbre de poulie motrice 7, des rayons 5.2 disposés radialement et des plaques de freinage 5.3 posées sur une surface frontale annulaire 4 de la poulie motrice 1.

3. Dispositif de freinage d'urgence selon la revendication 1, caractérisé en ce qu'il est prévu un appareil de déclenchement 18 qui déplace axialement le boulon d'arrêt 11 et est fixé à un support de palier 10, et qui comporte une bobine d'électro-aimant 12, un ressort de pression 21 et des paliers annulaires à glissement 19, 20.

4. Dispositif de freinage d'urgence selon la revendication 1, caractérisé en ce qu'il est prévu une rondelle-ressort 6 qui est disposée sur l'arbre de poulie motrice 7 entre le moyeu 5.1 et une bague d'écartement 17, et qui permet la pression statique du frein en étoile 5 contre la surface frontale annulaire 4 de la poulie motrice 1.

5. Dispositif de freinage d'urgence selon la revendication 1, caractérisé en ce que le boulon d'arrêt 11 comporte un élément magnétiquement conducteur 11.2 et un élément magnétiquement non conducteur 11.1.

6. Dispositif de freinage d'urgence selon les revendications 1 et 5, caractérisé en ce que le boulon d'arrêt 11 comporte une surface frontale 11.5 bombée suivant une forme sphérique, une bague de butée 11.4 et une collerette de butée de fin de course 11.3 actionnant un commutateur 22.

7. Dispositif de freinage d'urgence selon les revendications 1 et 3, caractérisé en ce qu'il est prévu un contact de travail 23.1 d'un limiteur de vitesse mécanique 23, lequel contact met en marche un enroulement 12.1 de la bobine d'électro-aimant 12.

8. Dispositif de freinage d'urgence selon les revendications 1 et 3, caractérisé en ce qu'il est prévu un contact de repos 23.2 du limiteur de vitesse mécanique 23, lequel contact met hors circuit l'enroulement 12.1 de la bobine d'électro-aimant 12.
